# FASCICULE DE BREVET EUROPEEN

(11) **EP 0 574 299 B1**
(45) Date de publication et mention de la délivrance du brevet: **13.03.1996**
(21) Numéro de dépôt: 93401454.9
(22) Date de dépôt: 08.06.1993
(51) Int. Cl.: C03B 23/047, C03B 37/012, G02B 6/38, G02B 6/44

(54) **Procédé de fabrication d'une multiferrule pour fibres optiques**
Multisteckerstiftleerstellungsverfahren für optische Fasern
Process of manufacture of a multiferrule for optical fibres

(30) Priorité: 09.06.1992 FR 9206919
(43) Date de publication de la demande: 15.12.1993
(73) Titulaire: ALCATEL CABLE INTERFACE, F-08330 Vrigne aux Bois (FR)
(72) Inventeur: Brehm, Claude, F-92120 Montrouge (FR); Dumas, Jean-Pierre, F-91360 Villemoisson Sur Orge (FR); Dupont, Philippe, F-77000 Melun (FR)
(74) Mandataire: Laroche, Danièle

(56) Documents cités:
- EP-A- 0 213 856
- EP-A- 0 372 450
- EP-A- 0 484 850
- WO-A-90/14316
- US-A- 3 677 730

## Description

La présente invention concerne un procédé de préparation d'une multiferrule pour fibres optiques tel que défini dans le preambule de la revendication 1.

Un tel procédé est décrit dans la demande de brevet européen EP-A-0 484 850.

Par ailleurs, US-A-3 677 730 décrit un organe multiplicateur d'electrons comprenant un corps cylindrique en verre percé d'une pluralité de canaux longitudinaux paralléles entre eux et réguliérement répartis autour de l'axe dudit corps.

La présente invention a pour but de réaliser de manière économique des multiferrules extrêmement compactes et permettant en particulier de connecter des fibres optiques à coeurs multiples.

A cet effet, La présente invention a pour objet un procédé de fabrication d'une multiferrule pour fibres optiques tel que défini à la revendication 1.

Selon un premier mode de réalisation, lesdites rainures longitudinales sont fermées par un tube cylindrique en silice entourant ledit jonc et manchonné sur ce dernier.

Avantageusement, on pratique dans ladite multiferrule au moins une saignée périphérique circulaire communiquant avec lesdits canaux en vue de la mise en place d'un moyen de serrage des fibres.

Selon un second mode de réalisation, on introduit respectivement dans lesdites rainures des tubes en silice définissant lesdits canaux et l'on donne a ladite préforme une forme régulière cylindrique par apport de grains de silice et mise en oeuvre d'un procédé de recharge par technique plasma.

D'autres caractéristiques et avantages de la présente invention apparaîtront au cours de la description suivante de modes de réalisation donnés à titre illustratif mais nullement limitatif. Dans le dessin annexé:
- La figure 1 est une vue très schématique en perspective éclatée des éléments d'une préforme utilisée pour la mise en oeuvre d'un exemple de procédé selon l'invention.
- La figure 2 montre schématiquement en perspective un exemple de multiferrule ovtenue à partir de la préforme de la figure 1.
- Les figures 3A à 3D montrent schématiquement en perspective différents éléments entrant dans la mise en oeuvre d'un autre exemple de procédé selon l'invention :
   . La figure 3A illustre un jonc en silice avec ses rainures longitudinales.
   . La figure 3B montre un tube en silice.
   . La figure 3C montre le jonc de la figure 3A associé à une pluralité de tubes selon la figure 3B.
   . La figure 3D montre le jonc de la figure 3C après recharge en grains de silice par technique plasma.

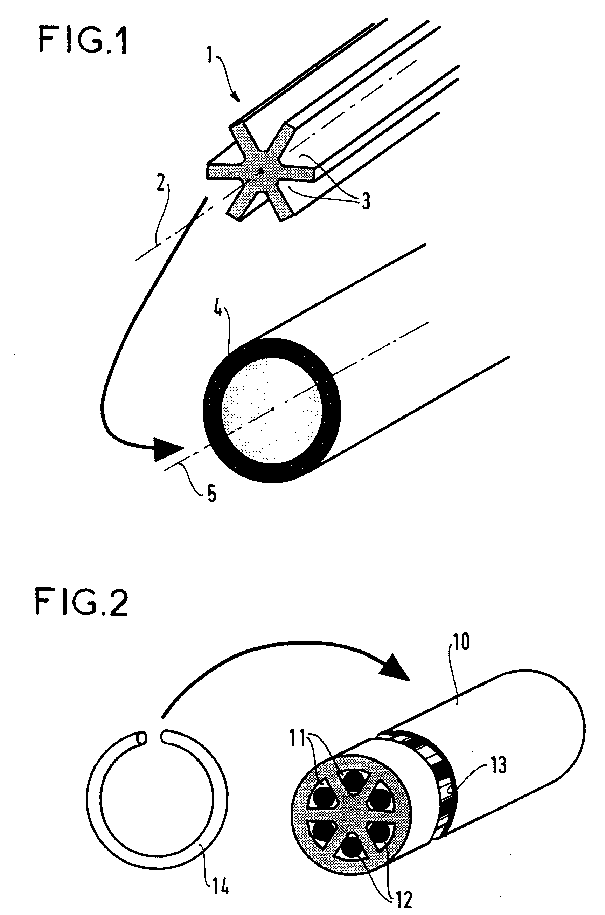

On voit dans la figure 1 un jonc 1 d'axe 2 en silice comprenant six rainures longitudinales parallèles 3 usinées en V réparties régulièrement autour de l'axe 2. Le diamètre maximal extérieur du jonc est de 22 mm ; sa longueur est de 200 mm ; la profondeur de chaque rainure est de 4,5 mm.

Le jonc 1 est introduit dans un tube en silice 4 d'axe 5, les axes 2 et 5 étant pratiquement confondus ; les diamètres interne et externe du tube 4 sont respectivement égaux à 26 mm et à 30 mm.On effectue un manchonnage et on obtient une préforme en silice avec six canaux internes.

Après fibrage on obtient une multiferrule 10 que l'on a représentée schématiquement dans la figure 2 avec ses canaux 11. Le diamètre de cette multiferrule est de 3 mm ; les canaux ont un diamètre moyen de 127 µm et ils reçoivent chacun une fibre optique 12. On prévoit une saignée circulaire 13 sur la périphérie de la multiferrule 10, et communiquant avec les canaux 11 pour pouvoir y insérer un anneau de serrage 14 et maintenir en place l'ensemble des fibres 12.

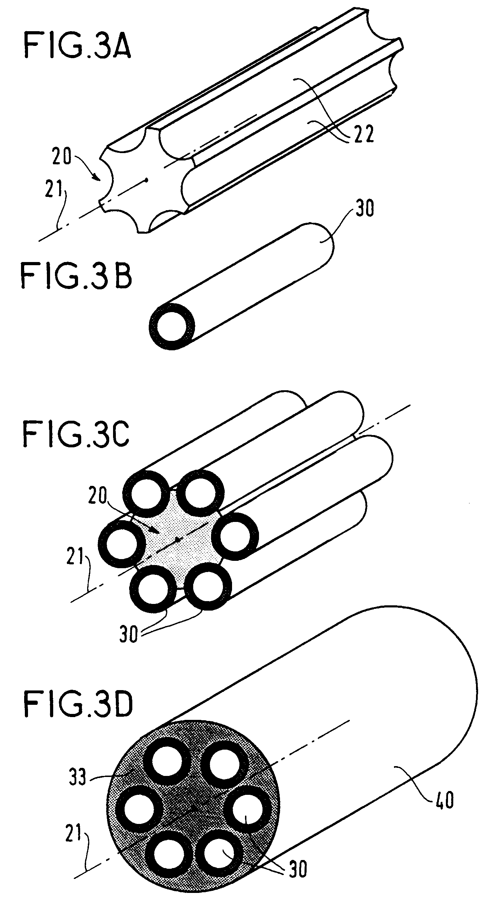

Dans un second mode de mise en oeuvre on part d'un jonc en silice 20 d'axe 21, de longueur 200 mm et présentant six rainures longitudinales usinées 22 réparties régulièrement autour de l'axe 21 (voir figure 3A). Le diamètre extérieur maximal du jonc 20 est de 20 mm et la profondeur des rainures est de 3 mm. Dans ces rainures, on dispose des tubes en silice 30 de diamètre intérieur 3 mm et de diamètre extérieur 9 mm (voir figures 3B et 3C).

En utilisant un procédé habituel, on recharge en silice 33 par technique plasma l'ensemble illustré dans la figure 3C. A titre d'exemple un procédé de ce genre est décrit dans l'article de R. Dorn et C. Le Sergent "Preform Technologies for Optical Fibers" Electrical Communication, Vol. 62, n° 3/4 - 1988, page 238 ; il est défini par les initiales ALPD : "Axial and Lateral Plasma Deposition".

La préforme ainsi obtenue est référencée 40 dans la figure 3D. Son diamètre extérieur est par exemple de 28 mm.

Après fibrage on obtient environ 15 mètres de multiferrule de diamètre extérieur 3 mm avec six canaux de diamètre intérieur 127 µm. On peut ainsi facilement réaliser 150 éléments de 10 cm, destinés à la connexion de fibres optiques.

Une telle multiferrule est particulièrement adaptée à la connexion de fibres multiguides décrites dans la demande de brevet européen EP-A-0 559 567 (qui constitue un document selon l'Article 54(3) CBE); une telle fibre peut comporter six guides optiques de diamètre extérieur 35 µm.

On a ainsi à sa disposition un moyen très économique de réalisation d'une multiferrule pour la connectique optique la plus compacte.

Bien entendu l'invention n'est pas limitée aux modes de réalisation qui viennent d'être exposés. On pourra, sans sortir du cadre de l'invention, remplacer tout moyen par un moyen équivalent. on pourra en particulier modifier les dimensions de la préforme en vue d'accroître le nombre des éléments de connexion.

## Revendications

1. Procédé de fabrication d'une multiferrule (10) pour fibres optiques (12) comprenant un corps percé d'une pluralité de canaux longitudinaux (11) paralléles entre eux, ledit procédé consistant à effectuer le fibrage d'une préforme (1, 4; 40) en silice comprenant une pluralité de canaux longitudinaux parallèles entre eux, et à réaliser ladite multiferrule par sectionnement de l'ensemble issu du fibrage, caractérisé par le fait que ladite préforme (1, 4; 40) est réalisée à partir d'un jonc (1; 20) en silice présentant une pluralité de rainures longitudinales (3; 22) réparties régulièrement autour de son axe (2; 21) et fermées par au moins une pièce (4; 30) en silice de manière à définir ladite pluralité de canaux.

2. Procédé de fabrication d'une multiferrule selon la revendication 1, caractérisé par le fait que ladite au moins une pièce fermant lesdites rainures longitudinales (3) du jonc est constituée par un tube cylindrique (4) en silice entourant ledit jonc (1) et manchonné sur ce dernier.

3. Procédé de fabrication d'une multiferrule selon la revendication 2, caractérisé par le fait que l'on pratique dans ladite multiferrule au moins une saignée périphérique circulaire (13) communiquant avec lesdits canaux (11), en vue de la mise en place d'un moyen de serrage (14) des fibres (12).

4. Procédé de fabrication d'une multiferrule selon la revendication 1, caractérisé par le fait que ladite au moins une pièce fermant lesdites rainures longitudinales (22) du jonc est constituée par une pluralité de tubes (30) en silice respectivement introduits dans lesdites rainures (22) et définissant lesdits canaux, la préforme ainsi obtenue étant alors rendue cylindrique par apport sur sa surface extérieure de grains de silice (33) et mise en oeuvre d'un procédé de recharge par technique plasma.

## Claims

1. The method of manufacturing a multiferrule (10) for optical fibers (12) comprising a body pierced with a plurality of mutually parallel longitudinal channels (11), said method consisting in fiber drawing a preform (1, 4; 40) of silica that includes a plurality of mutually parallel longitudinal channels, the method being characterized by the fact that said preform (1, 4; 40) is made from a rod (1; 20) of silica having a plurality of longitudinal grooves (3; 22) uniformly distributed about an axis (2; 21) and closed by at least one piece (4; 30) of silica for defining said plurality of channels.

2. A method of manufacturing a multiferrule according to claim 1, characterized by the fact that said at least one piece closing said longitudinal grooves (3) of the rod is constituted by a cylindrical silica tube (4) surrounding said rod (1) and shrunk onto the rod.

3. A method of manufacturing a multiferrule according to claim 2, characterized by the fact that at least one peripheral circular groove (13) is formed in said multiferrule, communicating with said channels (11) in order to enable fiber-clamping means (14) to be installed therein.

4. A method of manufacturing a multiferrule according to claim 1, characterized by the fact that said at least one piece closing said longitudinal grooves (22) of the rod is constituted by a plurality of silica tubes (30) inserted respectively in said grooves (22) and defining said channels, the preform thus obtained being cylindrical in shape by applying grains of silica (33) to its outside surface and implementing a filling method using the plasma technique.

## Patentansprüche

1. Verfahren zur Herstellung eines Mehrfachträgers (10) für Lichtleitfasern (12) mit einem Körper, der mehrere zueinander parallele Längskanäle (11) besitzt, wobei das Verfahren darin besteht, einen Rohling (1, 4; 40) aus Siliziumoxid, der mehrere zueinander parallele Längskanäle besitzt, einem Faserziehverfahren zu unterwerfen und den Mehrfachträger durch Zerschneiden des gezogenen Rohlings zu bilden, dadurch gekennzeichnet, daß der Rohling (1, 4; 40) von einem Kern (1; 20) aus Siliziumoxid gebildet wird, der mehrere gleichmäßig um seine Achse (2; 21) verteilte Längsrinnen (3, 22) aufweist, wobei die Rinnen durch mindestens ein Bauteil (4; 30) aus Siliziumoxid verschlossen werden, so daß sich die Kanäle ergeben.

2. Verfahren zur Herstellung eines Mehrfachträgers nach Anspruch 1, dadurch gekennzeichnet, daß das zumindest eine Bauteil, das die Längsrinnen (3) des Kerns verschließt, aus einem zylindrischen Rohr (4) besteht, das aus Siliziumoxid ist, den Kern (1) umgibt und auf diesen aufgemufft ist.

3. Verfahren zur Herstellung eines Mehrfachträgers nach Anspruch 2, dadurch gekennzeichnet, daß in dem Mehrfachträger mindestens eine periphere kreisförmige Rille (13) ausgebildet wird, die mit den Kanälen (11) in Verbindung steht, um Platz für ein Mittel (14) zum Einspannen der Fasern (12) zu bieten.

4. Verfahren zur Herstellung eines Mehrfachträgers nach Anspruch 1, dadurch gekennzeichnet, daß das mindestens eine Bauteil, das die Längsrinnen (22) des Kerns verschließt, aus mehreren Rohren (30) aus Siliziumoxid besteht, die in je eine der Rinnen (22) eingelegt sind und die Kanäle definieren, wobei der so erhaltene Rohling dann durch Aufbringen von Siliziumoxidkörnern (33) auf die Außenoberfläche und durch Anwenden eines plasmatechnischen Schweißverfahrens zylindrisch gemacht wird.
